# FASCICULE DE BREVET EUROPEEN

(11) **EP 4 634 555 B1**
(45) Date de publication et mention de la délivrance du brevet: **01.07.2026**
(21) Numéro de dépôt: 23838181.8
(22) Date de dépôt: 13.12.2023
(51) Int. Cl.: F16L 19/025, G01L 5/24, F16L 19/02

(54) **RACCORD A COUPLE DE SERRAGE DE CONSIGNE**
KUPPLUNG MIT SOLLWERTANZUGSDREHMOMENT
COUPLING WITH SETPOINT TIGHTENING TORQUE

(30) Priorité: 13.12.2022 FR 2213268; 12.12.2023 FR 2314006
(43) Date de publication de la demande: 22.10.2025
(73) Titulaire: Senior Aerospace Ermeto, 41330 Fosse (FR)
(72) Inventeur: JURION, Mathieu, 41330 FOSSE (FR); ROCHEREAU, Didier, 41330 FOSSE (FR); RAPP, Benjamin, 41330 FOSSE (FR); DIOT, Alexandre, 41330 FOSSE (FR); SIESKY, Clément, 41330 FOSSE (FR); LAGORS, Pierre, 41330 FOSSE (FR); GUENAIRE, Patrick, 41330 FOSSE (FR)
(74) Mandataire: Eidelsberg, Olivier Nathan
(86) Numéro de dépôt international: PCT/FR2023/051996
(87) Numéro de publication internationale: WO 2024/126948

(56) Documents cités:
- EP-A1- 0 590 996
- EP-A1- 3 953 629
- KR-A- 20010 016 385

## Description

### DOMAINE DE L'INVENTION

La présente invention se rapporte à un raccord à couple de serrage de consigne pour relier deux conduites comprenant : un premier embout fixé à une première conduite, un deuxième embout fixé à une deuxième conduite, un écrou de serrage porté par le deuxième embout et serrant celui-ci contre le premier embout, le premier embout ayant à son côté libre un segment fileté terminé par une extrémité formant une surface d'étanchéité, le second embout ayant une extrémité munie d'une collerette d'étanchéité munie d'une lèvre destinée à être serrée contre la surface d'étanchéité du premier embout, l'écrou emmanché libre en rotation sur le deuxième embout chevauchant sa collerette d'étanchéité et se vissant sur le segment fileté du premier embout pour pousser contre sa collerette et serrer sa lèvre d'étanchéité contre la surface d'étanchéité.

### ETAT DE LA TECHNIQUE

Il est connu de serrer des raccords réunissant deux conduites ou tuyaux avec un couple de serrage de consigne. Pour cela, on utilise une clef dynamométrique réglée au couple de consigne de sorte qu'il n'y a pas à tenir compte du mouvement de fin de course de la clef dynamométrique.

Toutefois, des opérations répétitives et rapides comme on peut en rencontrer dans l'industrie, sont fastidieuses à réaliser avec une clef dynamométrique. A cela s'ajoute l'éventuelle imprécision du réglage de la clef dynamométrique. La précision du serrage dépend aussi de la vitesse à laquelle se fait le serrage. Le document EP0590996A1 dévoile un raccord à couple de serrage de consigne de l'art antérieur.

### BUT DE L'INVENTION

La présente invention a pour but de développer un raccord permettant un serrage précis, exact et aussi de connaître la position de serrage exacte et de pouvoir la vérifier ce serrage à tout moment.

### EXPOSE ET AVANTAGES DE L'INVENTION

A cet effet, l'invention a pour objet un raccord à couple de serrage de consigne pour relier deux conduites comprenant : un premier embout fixé à une première conduite, un deuxième embout fixé à une deuxième conduite, un écrou de serrage porté par le deuxième embout et serrant celui-ci contre le premier embout, le premier embout ayant à son côté libre un segment fileté terminé par une extrémité formant une surface d'étanchéité, le second embout ayant une extrémité munie d'une collerette d'étanchéité munie d'une lèvre destinée à être serrée contre la surface d'étanchéité du premier embout, l'écrou emmanché libre en rotation sur le deuxième embout chevauchant sa collerette d'étanchéité et se vissant sur le segment fileté du premier embout pour pousser contre sa collerette et serrer sa lèvre d'étanchéité contre la surface d'étanchéité.

Ce serrage exact représente ainsi la déformation imposée à la lèvre d'étanchéité pour assurer l'étanchéité voulue.

Le raccord selon l'invention a l'avantage d'être d'une utilisation extrêmement simple puisque le raccord est préparé en usine pour que sa position de serrage affichée par le repère angulaire du premier embout et l'index de l'écrou réalisant le serrage, permet de connaître la position de serrage exacte à laquelle il faut arrêter le serrage.

Cette opération est rapide et sûre car elle ne nécessite aucune clef particulière pour assurer le serrage. Il suffit de serrer à partir du contact de la lèvre et de la surface d'appui jusqu'à la concordance entre le repère angulaire du premier embout et l'index de l'écrou ; il subsiste la trace du serrage correct, affichée par le raccord.

L'index axial peut également être remplacé par un index radial permettant de définir une plage de serrage.

Suivant une autre caractéristique avantageuse, la couronne d'écrou du premier embout est une couronne hexagonale à facettes et la tête de l'écrou est une tête hexagonale, le repère de la couronne d'écrou du premier embout correspond à une facette de la couronne et l'index de la tête d'écrou correspond à une facette de cette tête d'écrou.

Le repère angulaire de la couronne d'écrou et l'index de la tête d'écrou sont des éléments visibles, associés de manière définitive l'un à la couronne d'écrou du premier embout, l'autre à la tête d'écrou de l'écrou de sorte que la relation entre le premier embout avec sa couronne d'écrou et l'écrou de serrage est définie en usine, de manière définitive par cette association.

Suivant une autre caractéristique avantageuse la couronne d'écrou, hexagonale a un repère composé des chiffres 1 à 6 et la tête d'écrou a ses facettes munies d'un index composé des chiffres 1 à 6 associés respectivement à chaque facette, la position exacte de serrage étant celle de la concordance deux à deux de tous les chiffres de la tête d'écrou avec ceux de la couronne d'écrou, la position des chiffres de l'index en deçà du repère correspondant à un serrage insuffisant et le dépassement des chiffres de l'indice par rapport à ceux du repère correspondant à un serrage excessif.

La forme donnée au repère angulaire de la couronne d'écrou et à l'index de la tête d'écrou par la suite des chiffres 1 à 6 permet de reconnaître facilement la concordance entre la position de serrage de l'écrou et celle de la couronne d'écrou et cela quelle que soit l'orientation de l'écrou puisque les chiffres tant sur la couronne d'écrou que sur la tête d'écrou sont répartis sur toute la périphérie de chacune des deux parties du raccord.

Cette possibilité est particulièrement avantageuse pour le contrôle des réglages à vue et qui, quelle que soit la position et l'orientation du raccord dans une installation permet de trouver un angle de vue pour contrôler la concordance du repère angulaire et de l'index confirmant le réglage du serrage exact.

Suivant une autre caractéristique avantageuse, le repère de la couronne d'écrou est constitué par un trait axial associé au repère des chiffres et l'index de la tête d'écrou est un trait axial porté par la surface cylindrique prolongeant l'écrou par sa partie filetée vissée sur le segment fileté du premier embout.

Ce repère angulaire et l'index constitués par un trait respectif permettent un positionnement précis de l'écrou par rapport à la couronne d'écrou ; ce positionnement est plus précis que la concordance du positionnement des facettes de la couronne d'écrou et des facettes de la tête d'écrou.

Suivant une autre caractéristique avantageuse, le repère angulaire est composé d'une surface périphérique visible sur le premier embout entre la couronne d'écrou et le filetage et d'une zone vierge choisie en fonction de la position de rotation de l'écrou, l'index étant au moins une fenêtre dans un manchon de l'écrou venant en fin de vissage de l'écrou pour faire apparaître la zone vierge.

La position de la zone vierge est prédéfinie pour que cette zone apparaisse seule dans la ou les fenêtres lorsque l'écrou est dans la position de serrage de consigne, le filetage et le taraudage étant réalisés en conformité avec cet objectif.

Suivant une autre caractéristique avantageuse, la fenêtre est dédoublée et la zone vierge est dédoublée de façon homologue.

Ce dédoublement crée une position préparatoire de la position de serrage de consigne attirant l'attention au moment du serrage de l'écrou sur l'approche de la position de serrage de consigne. Cela permet également d'augmenter la précision de la position de serrage de consigne par la réduction de la largeur des fenêtres et des zones vierges homologues. Globalement, la réalisation de ces moyens de détection de la position de serrage de consigne est très simple et le serrage est rapide. En outre, le serrage de consigne se détecte facilement si la surface visible est couverte d'une couleur sensible à un rayonnement lumineux, par exemple, au rayonnement UV.

La surface visible est, par ailleurs, obtenue par l'état de la surface de cette partie de l'embout qui se distingue de façon visible de l'environnement sur l'embout.

En résumé, le raccord selon l'invention peut être facilement serré, de manière très précise et ce réglage est invariant, indépendamment de l'intervention de l'installateur car, ce réglage est associé à la concordance d'une marque sur le premier embout et d'une marque sur la tête d'écrou ; le résultat du serrage exact, c'est-à-dire avec une déformation précise de la lèvre d'étanchéité à partir de sa position de contact contre la surface d'étanchéité, est indépendant des aléas de réglage par l'installateur et reste visible après le serrage du raccord.

### BREVE DESCRIPTION DES DESSINS

La présente invention sera décrite ci-après de manière plus détaillée à l'aide d'un mode de réalisation d'un raccord représenté dans les dessins annexés dans lesquels :
[Fig. 1] vue de côté d'un raccord selon l'invention reliant deux conduites,
[Fig. 2] vue en coupe axiale du raccord de la figure 1,
[Fig. 3] schéma par des demi-coupes axiales des composants du raccord selon l'invention,
[Fig. 4] vue en perspective d'un raccord selon l'invention, à l'état assemblé,
[Fig. 5] vue avant assemblage d'un autre mode de réalisation du raccord,
[Fig. 5A] vue en coupe axiale de la figure 5,

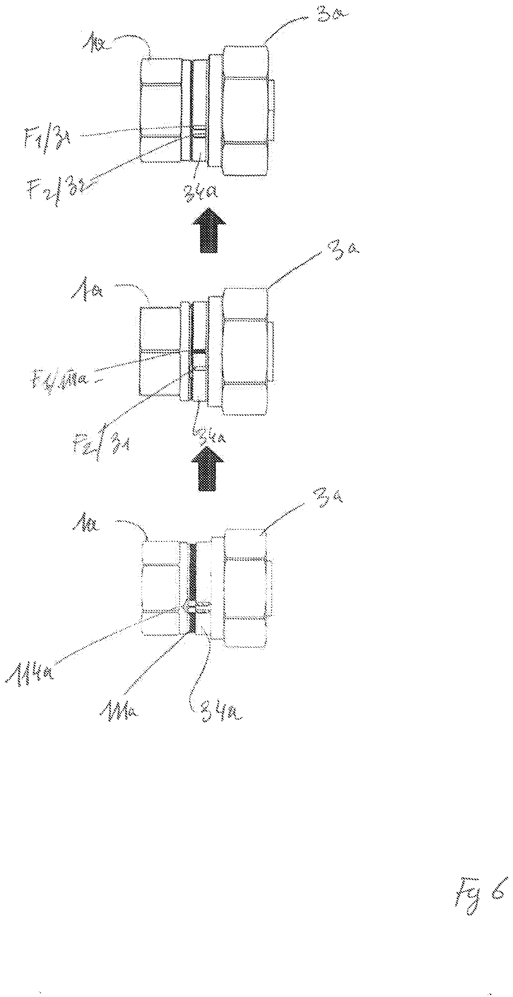

[Fig. 6] montre dans ses parties A, B, C la variation de l'affichage pendant le serrage de l'écrou jusqu'au serrage de consigne.

### DESCRIPTION D'UN MODE DE REALISATION DE L'INVENTION

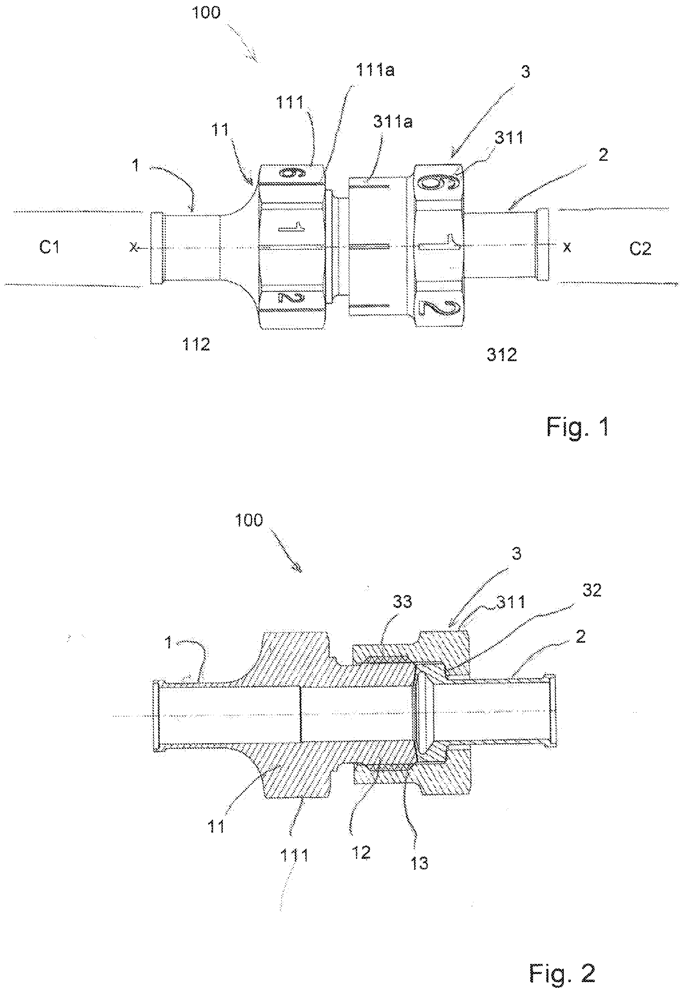

Selon la figure 1, représentant un premier mode de réalisation, l'invention a pour objet un raccord 100 destiné à relier deux conduites C1, C2, ce raccord devant être serré de manière précise, c'est-à-dire avec une déformation précise de la lèvre d'étanchéité à partir de sa position de contact contre la surface d'étanchéité.

Le raccord 100 comprend un premier embout 1 fixé à la première conduite C1 et un second embout 2 fixé à la seconde conduite C2 ainsi qu'un écrou 3 emmanché sur le second embout 2 pour être vissé sur le premier embout 1 avec un serrage exact de la lèvre d'étanchéité contre sa surface d'appui. Ce serrage est appelé serrage de consigne.

La figure 2 est une vue en coupe axiale du raccord de la figure 1 montrant le raccord 100 serré exactement.

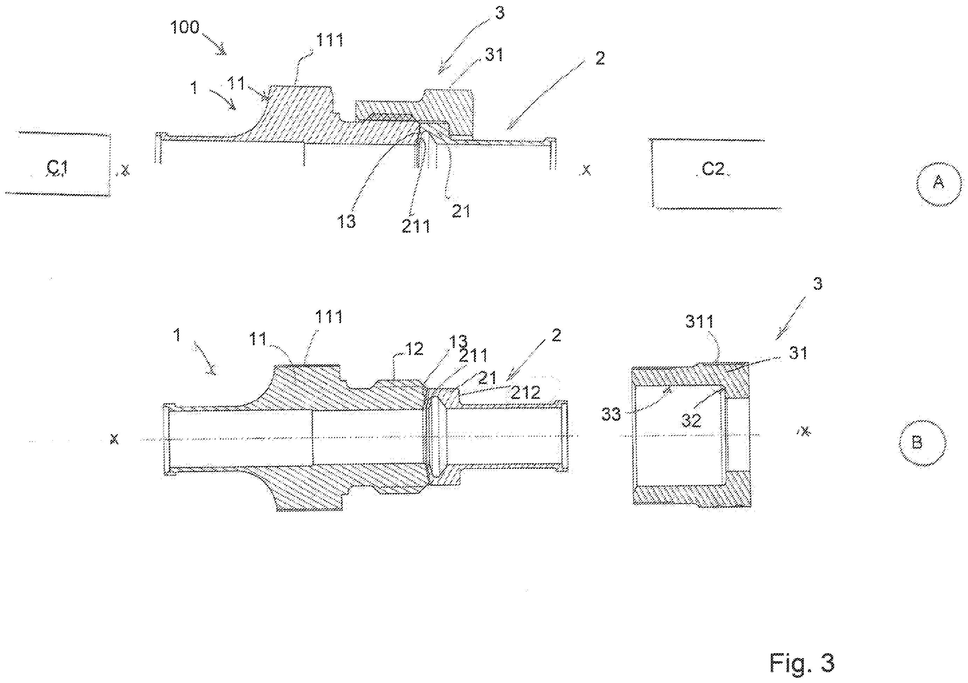

Selon les figures 2 et 3, le raccord 100 destiné à être serré exactement au serrage de consigne selon l'invention se compose du premier embout 1 globalement en forme de manchon dont une extrémité est reliée à la conduite C1 et l'autre extrémité est destinée à être réunie à l'extrémité homologue du second raccord 2 par l'écrou de serrage 3.

Selon la vue en demi-coupe axiale de la figure 3, le premier embout 1 a une couronne d'écrou 11 dont la périphérie forme une surface de prise d'outil, par exemple, une surface hexagonale à facettes 112 ou méplats. Le premier embout 1 a également un repère angulaire 111, par exemple, porté par la surface de prise d'outil de la couronne 11 ou par un autre endroit de la surface périphérique du premier embout 1.

Au-delà de la couronne d'écrou 11, près de sa seconde extrémité, le premier embout 1 comporte un segment fileté 12 qui se termine par une surface d'étanchéité 13 plane dans un plan perpendiculaire à l'axe XX du raccord 100 ou conique autour de l'axe XX.

Le second embout 2 destiné à être appliqué contre le premier embout 1 pour réaliser l'étanchéité du raccord, se compose d'un manchon dont une extrémité est destinée à être reliée à la conduite C2 et l'autre extrémité se termine par une collerette d'étanchéité 21 en relief par rapport à la partie cylindrique restante de l'embout 2.

La collerette 21 a une lèvre d'étanchéité 211 ; l'autre côté de la collerette 21 forme une couronne d'appui 212 plane ou conique. La lèvre d'étanchéité 211 doit être appuyée contre la surface d'étanchéité 13 avec une déformation précise.

Le troisième composant du raccord, l'écrou de serrage 3, est emmanché sur le deuxième embout 2. Cette mise en place de l'écrou de serrage 3 sur le deuxième embout 2 est faite avant que le deuxième embout 2 soit relié à la conduite C2.

L'écrou de serrage 3 emmanché sur le deuxième embout 2 est un élément de forme cylindrique de section circulaire ayant une couronne d'écrou 31 formant extérieurement une surface de prise d'outil, par exemple, une succession de facettes formant une tête d'écrou hexagonal et à une extrémité, un taraudage 33 correspondant au segment fileté 12 du premier embout 1.

Le taraudage 33 est réalisé dans la partie de l'écrou 3 qui est au diamètre du segment fileté 12 du premier embout 1 alors que l'autre extrémité de l'écrou 3 est une surface cylindrique circulaire de diamètre inférieur à celle du taraudage 33 de façon à former une surface d'appui 32 venant contre la surface d'appui 212 de la collerette d'étanchéité 21 de l'embout 2 pour presser la lèvre 211 contre la surface d'étanchéité 13 du premier embout 1 avec une déformation précise correspondant à l'étanchéité requise qu'elle doit assurer.

L'écrou 3 a un index 311, par exemple, réalisé sur la surface de la couronne d'écrou 31, tel que le marquage d'une facette 312 ou de l'ensemble des facettes de la couronne d'écrou 31.

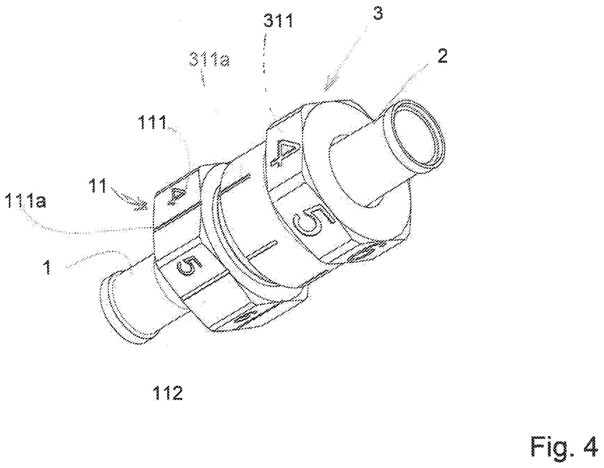

Selon les figures 1 et 4, la couronne d'écrou 11, hexagonale a des facettes 112 avec un ou plusieurs repères angulaires 111 composés des chiffres 1 à 6. La tête d'écrou 31 a ses facettes 312 munies d'un index 311 composé des chiffres 1 à 6 associés respectivement à chaque facette 312. La position de serrage exacte est la concordance des chiffres de la tête d'écrou 31 avec ceux de la couronne d'écrou 11. Les index et repères permettent aussi de détecter un serrage excessif ou insuffisant car la position des chiffres de l'index 311 en deçà du repère angulaire 111 correspond à un serrage insuffisant et le dépassement des chiffres de l'index 311 au-delà du repère angulaire 111 correspondant à un serrage avec un couple excessif.

Pour une plus grande précision du serrage, le repère angulaire 111 de la couronne d'écrou 11 est constitué par un trait axial 111a associé aux chiffres et l'index 311 de l'écrou 31 est complété par un trait axial 311a porté par la surface cylindrique prolongeant la tête d'écrou 31 par son prolongement taraudé, vissé sur le segment fileté 12 du premier embout 1.

Les traits d'alignements 11a, 311a sont avantageusement prévus sur tous les chiffrés ou facettes 112, 312 représentant le repère 11 et l'index 311 qui représentent une structure périphérique lisible sous tous les angles.

Selon l'invention, le segment fileté 12 de l'embout 1 a un filetage auquel correspond le taraudage 33 de l'écrou de serrage 3. La phase de serrage commence par le contact de la lèvre d'étanchéité 211 contre la surface d'appui 13. Ce contact est perçu au vissage. Cette position angulaire de contact n'est séparée de la position exacte de serrage que d'une fraction de tour. Le positionnement de l'index 311 par rapport au repère 111 est un mouvement à partir de ce contact du segment angulaire de rotation selon lequel il faut tourner l'écrou 3 pour assurer la coïncidence entre l'index 311 et le repère 111.

L'écrou de serrage 3 a son filet de taraudage 33 pour que le vissage de l'écrou 3 au serrage exact de la lèvre 211, c'est-à-dire sa déformation élastique optimale se traduise par la concordance entre l'index 311 de l'écrou 3 et le repère angulaire 111 de l'embout 1.

Cela nécessite également le positionnement précis de l'origine du filet du taraudage 33 de l'écrou de serrage 3 puisqu'avant la mise en place du raccord 100 sur le chantier, le premier embout 1 est séparé du sous-ensemble constitué par le second embout 2 et l'écrou de serrage 3 emmanché sur le second embout 2 avant que ce second embout 2 ne soit fixé à la conduite C2 et que, en parallèle, le premier embout 1 soit fixé à la première conduite C1.

Le serrage commence au contact de la lèvre 211 avec la surface d'appui 13 alors par l'entraînement en rotation de l'écrou 3 par rapport au premier embout 1 et ainsi par l'engagement du taraudage 33 de l'écrou 3 sur le segment fileté 12 du premier embout 1. Le vissage se poursuit jusqu'à ce que, après le premier contact lèvre 211 /appui 13, l'index 311 sur l'écrou de serrage 3 soit mis en concordance avec le repère 111 sur la couronne d'écrou 11.

La concordance index 311 /repère 111 est donc la « signature » du raccord 100 serré au serrage exact de la lèvre d'étanchéité 211 contre la surface d'appui 13.

Cette signature reste sur le raccord 100 et peut être vérifiée à tout moment.

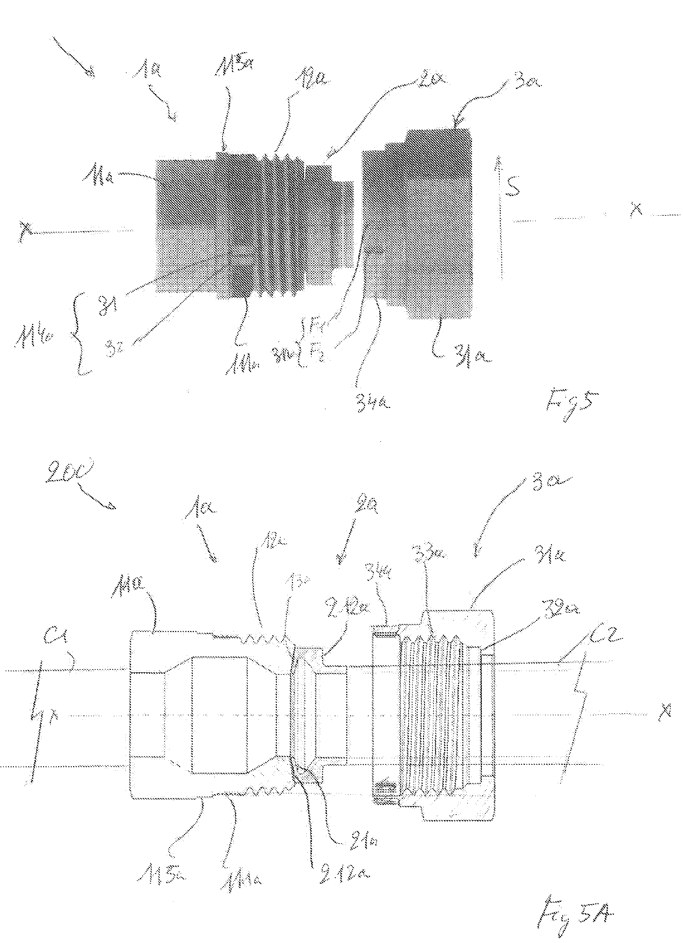

Les figures 5 et 5A montrent un deuxième mode de réalisation qui est un raccord 200 destiné à relier deux conduites non représentées. Ce raccord doit être serré de manière précise comme cela a déjà été indiqué. Par convention, les éléments identiques ou analogues à ceux du premier index portent les mêmes références numériques, complétées par le suffixe (a).

Le raccord 200 comprend un premier embout 1a, fixé à une première conduite C1 et un second embout 2a, fixé à une seconde conduite C2ainsi qu'un écrou 3a emmanché sur le second embout 2a pour être vissé sur le premier embout la avec un serrage exact appelé serrage de consigne.

Le premier embout 1a est un manchon dont une extrémité est reliée à la conduite C1 et l'autre extrémité est destinée à être reliée à l'extrémité homologue du second raccord 2a par l'écrou de serrage 3a.

Le premier embout 1a a une couronne d'écrou 11a dont la périphérie forme une surface de prise d'outil, par exemple, une surface à six pans. Le premier embout 1a comporte un repère angulaire composé d'une surface périphérique 111a en forme de couronne circulaire après la couronne d'écrou 11a et d'une plage vierge 114a. Cette couronne circulaire bordée par une collerette 115a est suivie d'un segment fileté 12a terminé par la surface d'étanchéité 13a

Le second embout 2a comporte à son extrémité tournée vers le premier embout, une collerette d'étanchéité 21a réalisant une couronne d'appui 212a qui doit être appuyée contre la surface d'étanchéité 13a du premier embout 1a.

L'écrou de serrage 3a est emmanché sur le second embout 2a avant que celui-ci ne soit relié à sa conduite. L'écrou est un élément de forme cylindrique, de section circulaire ayant une couronne d'écrou 31a formant extérieurement une surface de prise d'outil, par exemple hexagonale et en extrémité, un taraudage 33a correspondant au segment fileté 12a du premier embout 1a.

Le taraudage 33a est réalisé sur la partie de l'écrou 3a qui est au diamètre du segment fileté 12a du premier embout la alors que l'extrémité de l'écrou 3a est une surface cylindrique circulaire de diamètre inférieur à celle du taraudage de façon à former une surface d'appui 32a venant contre la surface d'appui 212a de la collerette d'étanchéité 21a de l'embout 2a pour l'appuyer contre la surface d'étanchéité 13a du premier embout la de façon précise.

L'écrou 3a a un index 311a réalisé sur son prolongement cylindrique qui vient au-delà du segment fileté 12a, à la fin du vissage.

La surface périphérique 111a sur le premier embout 1a s'étend sur toute la couronne ou seulement sur une partie de couronne circulaire délimitée axialement par la collerette 115a.

La surface périphérique 111a est une surface visible, soit par sa nature qui la distingue de son environnement sur l'embout 1a, par exemple, des irrégularités de surface telle qu'un moletage, soit par une caractéristique physique particulière la rendant visible notamment sous un certain éclairage, par exemple les UV ou complétée par cette caractéristique visuelle.

Toutefois, de façon générale, cette surface doit être visible à l'œil nu même si elle n'est pas éclairée par une lumière particulière. Cette surface périphérique visible 111a est interrompue localement, par une plage vierge 114a associée à la position de serrage de consigne du raccord.

L'écrou 3a est prolongé au-delà de son taraudage 33a par un manchon 34a comportant un index 311a associé à la position de serrage de consigne et coopérant avec le repère angulaire du premier embout 1a composé de la surface périphérique 111a et de la plage vierge 114a pour détecter, pendant la rotation relative de l'écrou 3a par rapport à l'embout 1a, la position de rotation relative qui est celle du serrage de consigne.

Dans ce mode de réalisation, l'index 311a se compose d'une et de préférence de deux fenêtres F1, F2 et la partie vierge 114a se compose de deux zones vierges z1, z2 de forme et de position homologues à celles des fenêtres F1, F2 jumelées pour qu'à la rotation relative écrou 3a/manchon 1a, pour la position de serrage de consigne, la partie vierge 114a apparaît dans l'index 311a alors que pour les autres postions relatives, seule la surface périphérique 111a apparaît par rapport à l'index 311a.

Le manchon 34a couvre la surface périphérique 111a pendant le vissage de l'écrou 3a sur le filetage 12a. Vers la fin du vissage, la surface périphérique visible 111a est complètement couverte et elle n'apparaît plus qu'à travers les fenêtres F1, F2. La surface périphérique visible 111a disparaît progressivement lorsque l'écrou 3a se rapproche de la position associée au serrage de consigne puisqu'alors les deux zones vierges z1, z2 coïncident avec les deux fenêtres F1, F2.

En principe, une seule fenêtre F1 ou F2 et une seule zone vierge z1 ou z2 seraient suffisantes. Mais, la précision de la position de serrage de consigne dépend de la largeur de la fenêtre et de celle de la zone vierge. Pour un réglage exact à la précision maximale, les deux surfaces des zones vierges z1, z2 et des fenêtres F1, F2 sont identiques. Mais cela impose une manœuvre de fin de vissage très précise rendue d'autant difficile qu'il faut exercer l'effort de vissage. Il est donc nécessaire d'augmenter la surface de la partie vierge 114a pour permettre le réglage, mais cela est au détriment de la précision car la partie vierge 114a nécessite une certaine rotation angulaire pour couvrir la fenêtre (tout en débordant).

La solution consiste donc à remplacer cette manœuvre d'approche nécessitant une partie vierge 114a large, par deux fenêtres jumelées F1, F2, de largeur réduite et deux zones vierges z1, z2 de surface et de dispositions identiques à celles des deux fenêtres. Cela permet une manœuvre d'approche beaucoup plus simple et donc plus rapide par l'apparition de la première zone vierge z1 dans la première fenêtre F1 puis sa disparition et ensuite quasi-immédiatement son apparition dans la deuxième fenêtre F2 ; cela correspond aussi à l'apparition de la première zone vierge z1 dans la deuxième fenêtre F2 confirmant le réglage précis.

La détection de la position de consigne est aussi facilitée par la double surface qui est celle de la somme des surfaces des deux zones vierges z1, z2. La disparition totale de la surface périphérique visible 111a est aussi très importante pour les contrôles si la surface visible est réfléchissante à une certaine longueur d'onde. Cela permet dans un environnement complexe, à faible éclairage, d'avoir l'éclairement de l'ensemble des raccords et de trouver immédiatement le ou les raccords mal vissés ou desserrés et sur lesquels il faut intervenir.

Il convient de remarquer le réglage de l'index ou de la plage vierge peut être tel que le manchon 34a laisse une bande non couverte en fin de vissage même si, par ailleurs, la ou les zones vierges z1, z2 coïncident avec les fenêtres F1, F2.

Les fenêtres F1, F2 étant allongées, orientées selon l'axe (xx) et comme la surface périphérique 111a est perpendiculaire à l'axe (xx), il en résulte que l'éclairage de cette surface résiduelle, visible notamment sous un éclairage aux rayons ultraviolets laisse apparaître une image cruciforme qui, très visible dans un contexte encombré, constitue un repère plus visible que la seule tâche visible d'une fenêtre F1, voire celle de deux fenêtres F1, F2.

Le sens de serrage est indiqué par la flèche S (figure 5). Au serrage, les fenêtres se déplacent comme suit :
La fenêtre F1 arrive d'abord sur la deuxième zone z2.

F2 couvre encore le support 111a qui apparaît dans la fenêtre F2. Une rotation très faible permet alors de mettre la fenêtre F1 sur la zone z1 et la fenêtre F2 sur la zone z2 confirmant le réglage précis.

En conclusion l'invention a pour objet un raccord 100 pour relier deux conduites C1, C2 comprenant un premier embout 1 fixé à une première conduite C1, un deuxième embout 2 fixé à une deuxième conduite C2, un écrou de serrage 3 porté par le deuxième embout 2 et serrant celui-ci contre le premier embout 1, le premier embout 1 ayant à son côté libre un segment fileté 12 terminé par une extrémité formant une surface d'étanchéité 13, le second embout 2 ayant une extrémité munie d'une collerette d'étanchéité 21 munie d'une lèvre 211 destinée à être serrée contre la surface d'étanchéité 13 du premier embout 1, l'écrou 3 emmanché libre en rotation sur le deuxième embout 2 chevauchant sa collerette d'étanchéité 21 et se vissant 31 sur le segment fileté 12 du premier embout 1 pour pousser contre sa collerette 21 et serrer sa lèvre d'étanchéité 211 contre la surface d'étanchéité 13, raccord 100 caractérisé en ce que le premier embout 1 a une couronne d'écrou 11 pour tenir l'embout 1 pour son vissage et un repère angulaire 111, l'écrou 3 a un index 311, et l'amorce et le pas du filetage du segment fileté (12) du premier embout 1 et de l'amorce et le pas du taraudage du segment taraudé 33 de l'écrou 3 sont prévus pour que le positionnement de l'index 311 de l'écrou 3 par rapport au repère angulaire 111 du premier embout 1 corresponde au serrage du raccord 100 avec la déformation élastique optimale de la lèvre d'étanchéité 211.

Dans ce raccord la couronne d'écrou 11 du premier embout 1 est une couronne hexagonale à facettes, la tête 31 de l'écrou 3 est une tête hexagonale et le repère de la couronne d'écrou 11 du premier embout 1 correspond à une facette 112 de la couronne 11 et l'index 311 de la tête d'écrou 31 correspond à un index 311 de l'écrou 3.

Selon une caractéristique, la couronne d'écrou 11, hexagonale a un repère angulaire 111 composé des chiffres 1 à 6 et la tête d'écrou 31 a ses facettes munies d'un index 311 composé des chiffres 1 à 6 associés respectivement à chaque facette,
- la position de serrage exacte étant celle de la concordance des chiffres de la tête d'écrou 31 avec ceux de la couronne d'écrou 11,
- la position des chiffres de l'index 311 en deçà du repère angulaire 111 correspond à un serrage insuffisant et le dépassement des chiffres de l'index 311 au-delà du repère angulaire 111 correspondant à un serrage avec un couple excessif.

De façon avantageuse, le repère angulaire 111 de 1a couronne d'écrou 11 est constitué par un trait axial associé aux chiffres et l'index 311 de l'écrou 31 est un trait axial porté par la surface cylindrique prolongeant la tête d'écrou par son taraudage vissé sur le segment fileté 12 du premier embout 1.

### NOMENCLATURE DES ELEMENTS PRINCIPAUX

### (sans suffixes alphabétiques sauf exception)

100 Raccord
1 Premier embout
11 Couronne d'écrou
111 Repère angulaire
111a Trait
112 Facette
114 Plage vierge
115 Collerette
12 Segment fileté
13 Surface d'étanchéité
2 Deuxième embout
21 Collerette d'étanchéité
211 Lèvre d'étanchéité
212 Couronne d'appui
3 Ecrou de serrage
31 Tête d'écrou
311 Index
311a Trait
312 Facette
32 Surface d'appui
33 Taraudage
34 Manchon
XX Axe du raccord
C1 Conduite
C2 Conduite
F1,F2 Fenêtres
z1,z2 Zones vierges
S Sens de serrage

## Revendications

1. Raccord (100, 200) à couple de serrage de consigne pour relier deux conduites (C1, C2) comprenant :
- un premier embout (1) fixé à une première conduite (C1),
- un deuxième embout (2) fixé à une deuxième conduite (C2),
- un écrou de serrage (3) porté par le deuxième embout (2) et serrant celui-ci contre le premier embout (1),
- le premier embout (1) ayant à son côté libre un segment fileté (12) terminé par une extrémité formant une surface d'étanchéité (13),
- le second embout (2) ayant une extrémité destinée à être serrée contre la surface d'étanchéité (13) du premier embout (1),
- l'écrou (3) emmanché libre en rotation sur le deuxième embout (2), le chevauchant et se vissant (31) sur le segment fileté (12) du premier embout (1) pour pousser l'extrémité du second embout (2a) et la serrer contre la surface d'étanchéité (13),
- le premier embout (1) a une couronne d'écrou (11) pour tenir l'embout (1) pour son vissage, raccord (100) **caractérisé en ce que**
- le premier embout (1) a un repère angulaire (111),
- l'écrou (3) a un index (311), et
- l'amorce et le pas du filetage du segment fileté (12) du premier embout (1) et de l'amorce et le pas du taraudage du segment taraudé (33) de l'écrou (3) sont prévus pour que le positionnement de l'index (311) de l'écrou (3) par rapport au repère angulaire (111) du premier embout (1) corresponde au serrage du raccord (100).

2. Raccord (100) selon la revendication 1,
**caractérisé en ce que**
- la couronne d'écrou (11) du premier embout (1) est une couronne hexagonale à facettes,
- la tête (31) de l'écrou (3) est une tête hexagonale, et
- le repère de la couronne d'écrou (11) du premier embout (1) correspond à une facette (112) de la couronne (11) et l'index (311) de la tête d'écrou (31) correspond à un index (311) de l'écrou (3).

3. Raccord (100) selon la revendication 2,
**caractérisé en ce que**
- la couronne d'écrou (11), hexagonale a un repère angulaire (111) composé des chiffres 1 à 6 et la tête d'écrou (31) a ses facettes munies d'un index (311) composé des chiffres 1 à 6 associés respectivement à chaque facette,
- la position de serrage exacte étant celle de la concordance des chiffres de la tête d'écrou (31) avec ceux de la couronne d'écrou (11),
- la position des chiffres de l'index (311) en deçà du repère angulaire (111) correspond à un serrage insuffisant et le dépassement des chiffres de l'index (311) au-delà du repère angulaire (111) correspondant à un serrage avec un couple excessif.

4. Raccord (100) selon l'une quelconque des revendications 1 à 3, **caractérisé en ce que**
le repère angulaire (111) de la couronne d'écrou (11) est constitué par un trait axial (111a) associé aux chiffres et l'index (311) de l'écrou (31) est un trait axial (31 1a) porté par la surface cylindrique prolongeant la tête d'écrou par son taraudage vissé sur le segment fileté (12) du premier embout 1.

5. Raccord (200) selon la revendication 1,
**caractérisé en ce que**
- le repère angulaire (111a) est composé d'une surface périphérique visible (111a) intégrée au premier embout (1a) entre la couronne d'extrémité (11a) et le filetage (12a) et d'une zone vierge (114a) choisie en fonction de la position de rotation de l'écrou (3a),
- l'index (31 1a) est au moins une fenêtre (F1, F2) dans le manchon (34a) venant en fin de vissage sur la zone vierge (z1, z2) pour la faire apparaître.

6. Raccord (200) selon la revendication 5,
**caractérisé en ce que**
la fenêtre (F1, F2) et la zone vierge (z1,z2) sont dédoublées de façon homologue.

7. Raccord (200) selon les revendications 5 et 6,
**caractérisé en ce que**
la surface périphérique visible (111a) est une surface moletée couverte d'une couleur sensible aux rayons UV.

## Patentansprüche

1. Kupplung (100, 200) mit Sollwertanzugsdrehmoment zum Verbinden zweier Leitungen (C1, C2), umfassend:
- einen ersten Anschlussstutzen (1), der an einer ersten Leitung (C1) befestigt ist,
- einen zweiten Anschlussstutzen (2), der an einer zweiten Leitung (C2) befestigt ist,
- eine Spannmutter (3), die auf dem zweiten Anschlussstutzen (2) aufgenommen ist und diesen gegen den ersten Anschlussstutzen (1) verspannt,
- wobei der erste Anschlussstutzen (1) an seiner freien Seite einen Gewindeabschnitt (12) aufweist, der an einem Ende mit einer eine Dichtfläche (13) bildenden Stirnfläche endet,
- wobei der zweite Anschlussstutzen (2) ein Ende aufweist, das dazu bestimmt ist, gegen die Dichtfläche (13) des ersten Anschlussstutzens (1) verspannt zu werden,
- wobei die Spannmutter (3) drehfrei auf dem zweiten Anschlussstutzen (2) aufgesteckt ist, diesen übergreift und sich auf den Gewindeabschnitt (12) des ersten Anschlussstutzens (1) aufschraubt (31), um das Ende des zweiten Anschlussstutzens (2a) vorzuschieben und gegen die Dichtfläche (13) zu verspannen,
- wobei der erste Anschlussstutzen (1) einen Sechskantbund (11) zum Halten des Anschlussstutzens (1) beim Einschrauben aufweist, wobei die Kupplung (100) **dadurch gekennzeichnet ist, dass**
- der erste Anschlussstutzen (1) eine Winkelmarkierung (111) aufweist,
- die Spannmutter (3) einen Index (311) aufweist, und
- der Anlauf und die Steigung des Gewindes des Gewindeabschnitts (12) des ersten Anschlussstutzens (1) sowie der Anlauf und die Steigung des Innengewindes des Gewindeabschnitts (33) der Spannmutter (3) so ausgelegt sind, dass die Positionierung des Index (311) der Spannmutter (3) relativ zur Winkelmarkierung (111) des ersten Anschlussstutzens (1) dem Anzugszustand der Kupplung (100) entspricht.

2. Kupplung (100) nach Anspruch 1,
**dadurch gekennzeichnet, dass**
- der Sechskantbund (11) des ersten Anschlussstutzens (1) ein facettierter Sechskantbund ist,
- der Kopf (31) der Spannmutter (3) ein Sechskantkopf ist, und
- die Markierung des Sechskantbundes (11) des ersten Anschlussstutzens (1) einer Facette (112) des Sechskantbundes (11) entspricht und der Index (311) des Schraubenkopfes (31) einem Index (311) der Mutter (3) entspricht.

3. Kupplung (100) nach Anspruch 2,
**dadurch gekennzeichnet, dass**
- der Sechskantbund (11) eine Winkelmarkierung (111) aufweist, die aus den Ziffern 1 bis 6 besteht, und der Schraubenkopf (31) an seinen Facetten einen Index (311) aufweist, der ebenfalls aus den Ziffern 1 bis 6 besteht, die jeweils den einzelnen Facetten zugeordnet sind,
- die exakte Anzugsposition derjenigen entspricht, bei der die Ziffern des Schraubenkopfes (31) mit denen des Sechskantbundes (11) übereinstimmen,
- eine Position der Ziffern des Index (311) vor der Winkelmarkierung (111) einem unzureichenden Anzug entspricht und ein Überstehen der Ziffern des Index (311) über die Winkelmarkierung (111) einem Anzug mit überhöhtem Drehmoment entspricht.

4. Kupplung (100) nach einem der Ansprüche 1 bis 3,
**dadurch gekennzeichnet, dass**
die Winkelmarkierung (111) des Sechskantbundes (11) durch einen axialen Strich (111a) gebildet ist, der den Ziffern zugeordnet ist, und der Index (311) der Mutter (31) ein axialer Strich (311a) ist, der auf der zylindrischen Oberfläche angeordnet ist, welche den Schraubenkopf in Richtung seines auf den Gewindeabschnitt (12) des ersten Anschlussstutzens (1) aufgeschraubten Innengewindes verlängert.

5. Kupplung (200) nach Anspruch 1,
**dadurch gekennzeichnet, dass**
- die Winkelmarkierung (111a) aus einer sichtbaren Umfangsfläche (111a) besteht, die in den ersten Anschlussstutzen (1a) zwischen dem Endbund (11a) und dem Gewinde (12a) integriert ist, sowie aus einer freien Zone (114a), die in Abhängigkeit von der Drehposition der Mutter (3a) ausgewählt ist,
- der Index (311a) aus mindestens einem Fenster (F1, F2) in der Hülse (34a) besteht, das am Ende des Einschraubvorgangs auf die freie Zone (z1, z2) trifft, um diese sichtbar zu machen.

6. Kupplung (200) nach Anspruch 5,
**dadurch gekennzeichnet, dass**
das Fenster (F1, F2) und die freie Zone (z1, z2) spiegelbildlich ausgebildet sind.

7. Kupplung (200) nach den Ansprüchen 5 und 6,
**dadurch gekennzeichnet, dass**
die sichtbare Umfangsfläche (111a) eine gerändelte Oberfläche ist, die mit einer gegenüber UV-Strahlung empfindlichen Farbe beschichtet ist.

## Claims

1. Coupling (100, 200) with a setpoint tightening torque for connecting two pipes (C1, C2) comprising:
- a first end piece (1) attached to a first pipe (C1),
- a second end piece (2) attached to a second pipe (C2),
- a clamping nut (3) that is borne by the second end piece (2) and clamps the latter against the first end piece (1),
- the first end piece (1) having on its free side a threaded segment (12) terminating in an end forming a sealing surface (13),
- the second end piece (2) having an end designed to be clamped against the sealing surface (13) of the first end piece (1),
- the nut (3) fitted freely rotating on the second end piece (2), overlapping it and screwing (31) onto the threaded segment (12) of the first end piece (1) to push the end of the second end piece (2a) and clamp it against the sealing surface (13),
- the first end piece (1) having a nut crown (11) for holding the end piece (1) for the screwing thereof
coupling (100) being **characterized in that**
- the first end piece (1) has an angular reference (111);
- the nut (3) has an index (311), and
- the run-out and the pitch of the thread of the threaded segment (12) of the first end piece (1) and the run-out and the pitch of the internal thread of the threaded segment (33) of the nut (3) are designed so that the positioning of the index (311) of the nut (3) with respect to the angular reference (111) of the first end piece (1) corresponds to the tightening of the coupling (100).

2. Coupling (100) according to claim 1,
**characterized in that**
- the nut crown (11) of the first end piece (1) is a faceted hexagonal crown,
- the head (31) of the nut (3) is a hexagonal head, and
- the reference of the nut crown (11) of the first end piece (1) corresponds to a facet (112) of the crown (11) and the index (311) of the nut head (31) corresponds to an index (311) of the nut (3).

3. Coupling (100) according to claim 2,
**characterized in that**
- the hexagonal nut crown (11) has an angular reference (111) consisting of the numbers 1 to 6 and the nut head (31) has its facets equipped with an index (311) consisting of the numbers 1 to 6 associated respectively with each facet,
- the exact tightening position being that in which the numbers on the nut head (31) match those on the nut crown (11),
- a position in which the numbers of the index (311) are below the angular reference (111) corresponding to insufficient tightening and one in which the numbers of the index (311) exceed those of the angular reference (111) corresponding to tightening

4. Coupling (100) according to any one of claims 1 to 3,
**characterized in that**
the angular reference (111) of the nut crown (11) consists of an axial line (111a) associated with the numbers and the index (311) of the nut (31) is an axial line (311a) carried on the cylindrical surface extending the nut head by its internal thread screwed onto the threaded segment (12) of the first end piece (1).

5. Coupling (200) according to claim 1,
**characterized in that**
- the angular reference (111a) consists of a visible peripheral surface (111a) integrated in the first end piece (1a) between the end crown (11a) and the thread (12a) and a blank area (114a) chosen according to the rotation position of the nut (3a),
- the index (311a) is at least one window (F1, F2) in the sleeve (34a) arriving on the blank area (z1, z2) at the end of the screwing to reveal it.

6. Coupling (200) according to claim 5,
**characterized in that**
the window (F1, F2) and the blank area (z1, z2) are duplicated in a matching way.

7. Coupling (200) according to claims 5 and 6,
**characterized in that**
the visible peripheral surface (111a) is a knurled surface covered with a color that is sensitive to UV light.
